# EUROPÄISCHE PATENTSCHRIFT

(11) **EP 0 815 636 B1**
(45) Veröffentlichungstag und Bekanntmachung des Hinweises auf die Patenterteilung: **02.06.1999**
(21) Anmeldenummer: 96905678.7
(22) Anmeldetag: 04.03.1996
(51) Int. Cl.: H02M 1/14

(54) **SCHALTUNGSANORDNUNG**
ELECTRIC CIRCUIT
CIRCUIT

(30) Priorität: 15.03.1995 DE 19509329
(43) Veröffentlichungstag der Anmeldung: 07.01.1998
(73) Patentinhaber: SIEMENS AKTIENGESELLSCHAFT, 80333 München (DE)
(72) Erfinder: DUCA, Christian, D-91054 Buckenhof (DE); WEBER, Marcus, D-91301 Forchheim (DE)
(86) Internationale Anmeldenummer: DE9600377
(87) Internationale Veröffentlichungsnummer: WO9628876

(56) Entgegenhaltungen:
- DE-A- 4 219 214
- DE-U-29 510 986
- GB-A- 1 411 440
- US-A- 4 195 334
- IEEE TRANSACTIONS ON AEROSPACE AND NAVIGATIONAL ELECTRONICS, Bd. aes-20, Nr. 1, Januar 1984, NEW YORK US, Seiten 57-66, XP002004380 S.S. KELKAR ET AL: "Adaptive Input Filter Compensation for Switching Regulators"
- WISSENSCHAFTLICHE BERICHTE AEG TELEFUNKEN, Bd. 51, Nr. 1, 1978, BERLIN DE, Seiten 56-63, XP002004381 J. NESTLER: "Glättungsfilter für Stromrichter"

## Beschreibung

Die Erfindung betrifft eine Schaltungsanordnung, bei der ein motorseitiger Stromrichter über seine Eingangseinschlüsse an ein Gleichspannungsnetz geschaltet ist und bei der wenigstens ein Netzkondensator parallel zum motorseitigen Stromrichter sowie wenigstens eine Netzdrossel in Reihe zum Netzkondensator geschaltet ist.

Derartige Schaltungsanordnungen dienen dazu, Oberschwingungsströme, die ein motorseitiger Stromrichter ins Gleichspannungsnetz zurückspeist, zu reduzieren. Im bekannten Fall werden durch eine geeignete Dimensionierung des Netzkondensators sowie der Netzdrossel die in das Gleichspannungsnetz zurückgespeisten Oberschwingungsströme auf die geforderten Grenzwerte begrenzt. Bei hohen Anforderungen, d.h. wenn nur ein geringer Anteil der Oberschwingungsströme in das Gleichspannungsnetz zurückgespeist werden darf, müssen der Netzkondensator sowie die Netzdrossel sehr groß dimensioniert werden.

In der GB-PS 14 11 440 wird deshalb vorgeschlagen, zum Netzkondensator wenigstens einen LC-Reihenschwingkreis, der wenigstens eine Kapazität und wenigstens eine Induktivität umfaßt, parallel zu schalten. Mit einer derartigen Schaltungsanordnung können jedoch nur Oberschwingungsströme in einem vorgebbaren Bandbereich verringert werden. Oberschwingungsströme oberhalb einer vorgebbaren Mindestfrequenz können mit dieser Schaltung nicht reduziert werden. Eine Reduzierung von Oberschwingungsströmen oberhalb einer vorgegebenen Mindestfrequenz konnte bisher nur dadurch erreicht werden, daß die Netzdrossel und der Netzkondensator sehr groß dimensioniert werden. Die bei dieser Schaltungsanordnung mögliche Parallelschaltung eines RC-Kreises zum Zwischenkreiskondensator dient ausschließlich einer Erhöhung der Eingangsimpedanz für 50 Hz-Ströme.

Weiterhin ist in der DE-OS 42 19 214 eine Schaltung zur Oberwellenbedämpfung beschrieben, welche zwischen einem Stromrichter und einem Wechselspannungsnetz, in das Energie eingespeist wird, geschaltet ist. Das Netz stellt damit die Last für den Stromrichter dar. Die Schaltung umfaßt eine Duplexdrossel, die eine an den Stromrichter angeschlossene Primärwicklung und eine an das Wechselspannungsnetz angeschlossene, antiparallel zur Primärwicklung geschaltete Sekundärwicklung aufweist. Der Oberschwingungsanteil im Laststrom wird durch die Duplexdrossel und ein auf eine vorgebbare Frequenz abgestimmtes LC-Filter, das mit einem Anzapfungspunkt der Duplexdrossel verbunden ist, reduziert.

Aufgabe der vorliegenden Erfindung ist es deshalb, eine Schaltungsanordnung zu schaffen, die ohne unnötig große Dimensionierung des Netzkondensators und der Netzinduktivität eine Reduzierung der vom motorseitigen Stromrichter in das Gleichspannungsnetz zurückgespeisten Oberschwingungsströme oberhalb einer vorgebbaren Frequenz ermöglicht.

Die Lösung der gestellten Aufgabe gelingt in Verbindung mit den Merkmalen des Oberbegriffs durch die im kennzeichnenden Teil des Anspruchs 1 angegebenen Merkmale.

Bei der Schaltungsanordnung gemäß Anspruch 1 weist die Netzdrossel wenigstens einen Anzapfungspunkt auf, an den wenigstens ein RC-Kreis parallel zum Netzkondensator geschaltet ist. Der RC-Kreis umfaßt hierbei wenigstens eine Kapazität und wenigstens einen dazu in Reihe angeordneten Widerstand.

Durch die erfindungsgemäße Schaltungsanordnung können auf einfache Weise Oberschwingungen des motorseitigen Stromrichters oberhalb einer vorgebbaren Mindestfrequenz stark gedämpft werden. Der Kondensator des parallel zum Netzkondensator geschalteten RC-Kreises ist hierzu auf diese Mindestfrequenz abzustimmen. Für die Oberschwingungsströme oberhalb dieser Mindestfrequenz bildet der parallel zum Netzkondensator geschaltete RC-Kreis einen niederimpedanten Zweig, über den die Oberschwingungsströme fließen. Die Netzdrossel und der Netzkondensator müssen bei der erfindungsgemäßen Schaltungsanordnung damit nicht mehr überdimensioniert werden.

Im allgemeinen ist ein einziger RC-Kreis vollkommen ausreichend. Es ist jedoch genausogut möglich, mehrere RC-Kreise parallel zum Netzkondensator zu schalten. Es versteht sich in diesem Zusammenhang von selbst, daß dann entweder alle RC-Kreise an einen gemeinsamen Anzapfungspunkt geführt sein können, oder daß für jeden RC-Kreis ein eigener Anzapfungspunkt an der Netzdrossel vorgesehen ist.

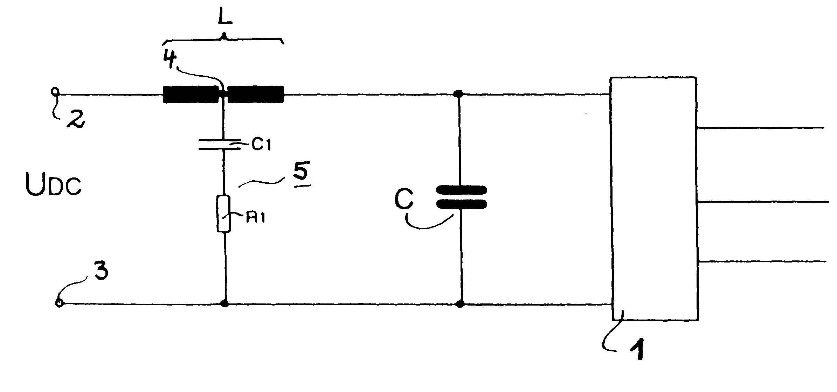

Weitere Vorteile und Einzelheiten der Erfindung ergeben sich aus der nachfolgenden Beschreibung eines in der Zeichnung dargestellten Ausführungsbeispieles.

In der Zeichnung ist mit 1 ein motorseitiger Stromrichter bezeichnet, der vorzugsweise als Pulswechselrichter ausgebildet ist. Der Pulswechselrichter 1 ist über seine Eingangsanschlüsse 2 und 3 an ein Gleichspannungsnetz U_{DC} geschaltet. Parallel zum Pulswechselrichter 1 ist ein Netzkondensator C geschaltet. Weiterhin ist bei der in der Zeichnung gezeigten Ausgestaltung der erfindungsgemäßen Schaltungsanordnung eine Netzdrossel L in Reihe zum Netzkondensator C geschaltet.

Erfindungsgemäß weist die Netzdrossel L einen Anzapfungspunkt 4 auf, der im gezeigten Ausführungsbeispiel mittig angeordnet ist. An den Anzapfungspunkt 4 ist ein RC-Kreis 5 parallel zum Netzkondensator C geschaltet. Der RC-Kreis 5 umfaßt eine Kapazität C₁ und einen dazu in Reihe angeordneten Widerstand R₁.

Der RC-Kreis 5 der erfindungsgemäßen Schaltungsanordnung ist in Abhängigkeit von der Netzdrossel L auf die Mindestfrequenz der zu dämpfenden Oberschwingungsströme abgestimmt. Für die Oberschwingungsströme oberhalb dieser Mindestfrequenz bildet der RC-Kreis 5 damit einen niederimpedanten Zweig, über den die Oberschwingungsströme kurzgeschlossen werden. Damit werden auf einfache Weise die Oberschwingungsströme, die der Pulswechselrichter 1 in das Gleichspannungsnetz U_{DC} zurückspeist, reduziert. Der Netzkondensator C sowie die Netzdrossel L müssen damit nicht mehr überdimensioniert werden.

## Patentansprüche

1. Schaltungsanordnung, bei der ein motorseitiger Stromrichter (1) über seine Eingangsanschlüsse (2,3) an ein Gleichspannungsnetz (U_{DC}) geschaltet ist und bei der wenigstens ein Netzkondensator (C) parallel zum motorseitigen Stromrichter (1) sowie wenigstens eine Netzdrossel (L) in Reihe zum Netzkondensator (C) an das Gleichspannungsnetz geschaltet ist,
**dadurch gekennzeichnet**,
daß die Netzdrossel (L) wenigstens einen Anzapfungspunkt (4) aufweist, an den wenigstens ein RC-Kreis (5) parallel zum Netzkondensator (C) geschaltet ist, wobei der RC-Kreis (5) wenigstens eine Kapazität (C₁) und wenigstens einen dazu in Reihe angeordneten Widerstand (R₁) umfaßt.

2. Schaltungsanordnung nach Anspruch 1,
**dadurch gekennzeichnet,**
daß der Anzapfungspunkt (4) mittig an der Netzdrossel (L) angeordnet ist.

3. Schaltungsanordnung nach Anspruch 1,
**dadurch gekennzeichnet,**
daß der motorseitige Stromrichter (1) als Pulswechselrichter ausgebildet ist.

## Claims

1. Circuit arrangement in which a motor-side power converter (1) is connected via its input terminals (2, 3) to a direct-voltage supply system (U_{DC}) and in which at least one system capacitor (C) is connected in parallel with the motor-side power converter (1) and at least one line reactor (L) is connected to the direct-voltage supply system in series with the system capacitor (C), characterised in that the line reactor (L) has at least one tapping point (4), at which at least one RC circuit (5) is connected in parallel with the system capacitor (C), with the RC circuit (5) having at least one capacitor (C₁) and at least one resistor (R₁) arranged in series therewith.

2. Circuit arrangement according to claim 1, characterised in that the tapping point (4) is arranged centrally on the line reactor (L).

3. Circuit arrangement according to claim 1, characterised in that the motor-side power converter (1) is constructed as a pulse-controlled inverter.

## Revendications

1. Montage, dans lequel un convertisseur (1) situé côté moteur est branché, par l'intermédiaire de ses bornes (2, 3) d'entrée, à un réseau (U_{DC}) de tension continue et dans lequel au moins un condensateur (C) de réseau est branché en parallèle au convertisseur (1) situé côté moteur et au moins une bobine (L) de réseau est branchée au réseau de tension continue, en série avec le condensateur (C) de réseau, caractérisé en ce que la bobine (L) de réseau comprend au moins un point (4) de prise auquel est branché, en parallèle avec le condensateur (C) de réseau, au moins un circuit (5) résistance-capacité, le circuit (5) résistance-capacité comprenant au moins une capacité (C₁) et au moins une résistance (R₁) montée en série avec cette capacité.

2. Montage suivant la revendication 1, caractérisé en ce que le point (4) de prise est disposé au milieu sur la bobine (L) de réseau.

3. Montage suivant la revendication 1, caractérisé en ce que le convertisseur (1) situé côté moteur est réalisé en onduleur à impulsions.
